# EUROPEAN PATENT APPLICATION

(11) **EP 4 811 796 A1**
(43) Date of publication of application: **23.09.2026**
(21) Application number: 25164515.6
(22) Date of filing: 18.03.2025
(51) Int. Cl.: H04N 21/2187, G06N 3/0455, G06T 1/20, G06T 3/4053, H04N 21/2343, H04N 21/4402, G06T 3/4046, H04N 21/426, G06F 9/50

(54) **REAL-TIME DATA PIPELINE FOR AI-ENHANCING FRAMES**

(71) Applicant: Artesis Plantijn Hogeschool Antwerpen, 2000 Antwerpen (BE)
(72) Inventor: Cluckers, Jeroen, 2000 Antwerpen (BE); Spriet, Lowie, 2000 Antwerpen (BE)
(74) Representative: Ipsilon Belgium

(57) **Abstract**

Example embodiments relate to a computer-implemented method for generating a real-time stream of AI-enhanced video frames on a graphics processing unit, GPU, cluster (211); wherein the GPU cluster comprises a processing unit (212) and a plurality of GPUs (220, 230, 240); and wherein the respective GPUs are configured to support one or more GPU-accelerated containers (221, 222, 231, 232, 233, 241) each running a generative AI-model asynchronously to enhance a video frame into an AI-enhanced video frame; the computer-implemented method comprising, by the processing unit (212), while receiving (218) a live video feed: assigning (202, 214, 215, 216) the respective video frames of the live video feed to available GPU-accelerated containers; outputting (204, 219) a next AI-enhanced video frame to the real-time stream at a specified frame rate, if (203) the next AI-enhanced video frame is available within a threshold interval from outputting the previous AI-enhanced video frame to the real-time stream; else, reducing (205) a performance score of the GPU-accelerated container tasked with enhancing a video frame into the next AI-enhanced video frame; and disabling (206) GPU-accelerated containers with a performance score lower than a minimum performance score defined by a minimum frame rate for the real-time stream.

## Description

### Field of the Invention

The present disclosure generally relates to a real-time data pipeline for enhancing frames by artificial intelligence, AI. In particular, the disclosure relates to a real-time video pipeline for enhancing video frames by AI.

### Background of the Invention

Real-time processing of dynamic high-frequency data streams, e.g. video frames, audio frames, social media feeds, financial market data, Internet of Things sensor data, live traffic data, health monitoring data, weather data, or other temporal dynamic data, poses significant computational challenges, particularly when applying artificial intelligence-, AI-, based enhancement techniques.

Enhancing data frames in real-time using AI requires substantial processing power, often necessitating the use of Graphics Processing Units, GPUs, due to their parallel computing capabilities. However, conventional approaches to GPU workload distribution suffer from inefficiencies such as suboptimal resource allocation, excessive latency, and bottlenecks in memory bandwidth, all of which hinder real-time performance. These inefficiencies are exacerbated when dealing with dynamically varying workloads due to fluctuating frame complexity and, thus, fluctuating computational demands over time. This results in unpredictable frame processing times.

Distributing the workload of AI-enhancing temporal dynamic data across multiple GPUs has the further challenge that the data streams have to be segmented, enhanced on a frame-by-frame basis, and merged in real-time and in chronological order after being enhanced. Due to the unpredictable frame processing times, it is a challenge to precisely time and schedule the GPU workloads such that a stable output data rate can be maintained and presented in real-time to a user without stuttering or delays. For example, it may be challenging to provide a real-time preview of AI-enhanced video frames at a stable frame rate while the video is being recorded.

### Summary of the Invention

It is an object of the present invention, amongst others, to solve or alleviate the above identified problems and challenges by providing a computer-implemented method enabling the generation of a real-time stream of AI-enhanced video frames at a substantially stable frame rate.

According to a first aspect, this object is achieved by a computer-implemented method for generating a real-time stream of AI-enhanced video frames on a graphics processing unit, GPU, cluster; wherein the GPU cluster comprises a processing unit and a plurality of GPUs; and wherein the respective GPUs are configured to support one or more GPU-accelerated containers each running a generative AI-model asynchronously to enhance a video frame into an AI-enhanced video frame; the computer-implemented method comprising, by the processing unit, while receiving a live video feed:
- assigning the respective video frames of the live video feed to available GPU-accelerated containers to asynchronously enhance the live video feed frame-by-frame into the real-time stream of AI-enhanced video frames;
- outputting a next AI-enhanced video frame to the real-time stream at a specified frame rate, if the next AI-enhanced video frame is available within a threshold interval from outputting the previous AI-enhanced video frame to the real-time stream;
- else, reducing a performance score of the GPU-accelerated container tasked with enhancing a video frame into the next AI-enhanced video frame; and
- disabling GPU-accelerated containers with a performance score lower than a minimum performance score defined by a minimum frame rate for the real-time stream.

The processing unit thus receives a continuous stream of video frames from a live video feed and orchestrates their frame-by-frame conversion into a stream of AI-enhanced video frames in substantially real-time by distributing the workload across GPU-accelerated containers in an inventive way that allows maintaining a substantially stable frame rate for the real-time stream of AI-enhanced video frames. The computer-implemented method thus allows enhancing the live video feed in substantially real-time while maintaining a substantially stable frame rate for the outputted stream of AI-enhanced video frames. This enhancing may include applying, for example, super-resolution, upscaling, noise reduction, frame interpolation, video reconstruction, style transformation, and/or video augmentation.

The live video feed may be a live camera feed captured by an image capturing device, e.g. while shooting a movie, covering a sports event, recording a YouTube video, having a videocall, or recording a picture-in-picture stream such as a facecam recording for a gaming stream. This may, for example, allow to generate a real-time preview of the AI-enhanced video frames while capturing the video frames with an image capturing device. Alternatively, the live video feed may be a stream of rendered in-game frames which are dynamically generated by a game engine based on a player's actions. This may, for example, allow to generate an improved and/or personalized gaming experience.

The frame rate of the real-time stream can be maintained substantially stable by keeping track of a performance score for the respective GPU-accelerated containers tasked with enhancing video frames into AI-enhance video frames. If a certain GPU-accelerated container underperforms by processing video frames too slowly it's performance score is reduced. A GPU-accelerated container underperforms if it does not process a video frame in time to be outputted to the real-time stream of AI-enhanced video frames, i.e. if it is not processed within the threshold interval from outputting the previous AI-enhanced video frame to the real-time stream. The threshold interval includes the frame interval of the specified frame rate, e.g. about 16.67 ms for 60 fps, in addition to an allowable margin of error, e.g. 25 ms. In other words, if the AI-enhanced video frame is not available at the specified frame rate, the GPU-accelerated container still has time during the allowable margin of error to finish processing the video frame without having its performance score reduced.

If the GPU-accelerated container fails to complete the generation of the AI-enhanced video frame within the threshold interval, the performance score of the GPU-accelerated container is reduced. If the performance score of a GPU-accelerated container drops below a minimum performance score, that GPU-accelerated container is disabled. Disabling a GPU-accelerated container refers to refraining from assigning any future video frames of the live video feed to said GPU-accelerated container to enhance them. The minimum performance score is defined by a minimum frame rate, i.e. a GPU-accelerated container that has a performance score lower than the minimum performance score can no longer be trusted to process frames quickly enough to respect the minimum frame rate. The minimum frame rate may be selected such that the difference between the specified frame rate and the minimum frame rate is hardly noticeable by a viewer.

In doing so, GPU-accelerated containers that hamper or stall the output of AI-enhanced video frames at the specified frame rate can be detected and removed from the pipeline without the viewer noticing any substantial frame rate drop, choppiness, frame skipping, stuttering, lag, or otherwise unstable frame rate. The computer-implemented method thus allows keeping the frame rate of the real-time stream substantially stable at around the specified frame rate.

According to an example embodiment, the threshold interval may be defined by the minimum frame rate.

The minimum frame rate may, for example, be 24 fps. The threshold interval may then correspond to the frame interval associated with this minimum frame rate, i.e. 1/24 fps = 41.67 ms. As such, the performance score of a GPU-accelerated container may be reduced if a next AI-enhanced video frame is not available at the minimum frame rate.

According to an example embodiment, the GPU cluster may be a local GPU cluster.

A local GPU cluster refers to a GPU cluster that is physically located in a single location rather than being cloud-based. A local GPU cluster may comprise a plurality of interconnected machines, e.g. connected by a local area network, LAN. A local GPU cluster has the advantage that it can avoid the additional latency incurred by distributing frames to and from the GPU-accelerated containers of a cloud-based GPU cluster over an internet connection, which typically has a limited bandwidth.

According to an example embodiment, the GPU cluster may further comprise a shared memory that is accessible to the processing unit and the GPUs; and wherein assigning respective video frames of the live video feed to available GPU-accelerated containers comprises:
- by the processing unit, marking the respective video frames with an identifier associated with an available GPU-accelerated container and storing the marked video frames within the shared memory; and
- by the available GPU-accelerated containers, fetching the video frames marked with their associated identifier from the shared memory.

According to an example embodiment, the GPU cluster may further comprise a shared memory that is accessible to the processing unit and the GPUs; the computer-implemented method further comprising:
- by the GPU-accelerated containers, marking a video frame assigned to the GPU-accelerated containers as enhanced after completing the enhancing of the video frame into an AI-enhanced video frame, and storing the marked AI-enhanced video frames within the shared memory; and
- by the processing unit, fetching the AI-enhanced video frames marked as enhanced from the shared memory.

According to an example embodiment, the computer-implemented method may further comprise, by the processing unit, buffering the AI-enhanced video frames within a queue and monitoring the queue for the presence of the next AI-enhanced video frame at least at the specified frame rate of the real-time stream.

The processing unit may thus be configured to check, at least at the specified frame rate, whether the next AI-enhanced video frame has been buffered therein by a GPU-accelerated container tasked with generating the next AI-enhanced video frame. The processing unit may monitor or check the queue more frequently, e.g. continuously, in particular within the threshold interval.

According to an example embodiment, the computer-implemented method may further comprise, by the processing unit, marking the video frames of the live video feed with a frame number indicative for the temporal order of the video frames within the live video feed; and monitoring the queue for the next AI-enhanced video frame based on the marked frame number passed on from the video frame to the AI-enhanced video frame.

In doing so, the AI-enhanced video frames of the real-time stream can be outputted in the same temporal order as recorded in the live video feed at a low computational cost.

According to an example embodiment, the computer-implemented method may further comprise, by the processing unit, if the next AI-enhanced video frame is unavailable within the threshold interval, outputting the AI-enhanced frame within the queue that is marked with the smallest frame number.

In doing so, the video frame closest in temporal order to the next AI-enhanced video frame that should have been outputted is outputted to the real-time stream. This effectively skips one or more next AI-enhanced video frames. This can avoid or at least limit interruptions, lag, and substantial frame rate drops of the real-time stream.

According to an example embodiment, the computer-implemented method may further comprise, by the processing unit, if the next AI-enhanced video frame is unavailable within the threshold interval, outputting the previous AI-enhanced frame again.

According to an example embodiment, the computer-implemented method may further comprise, before assigning video frames of the live video feed to available GPU-accelerated containers, determining an initial number of GPUs and/or GPU-accelerated containers for achieving the specified frame rate of the real-time stream.

The initial number of GPUs and/or GPU-accelerated containers required for achieving the specified frame rate of the real-time stream may thus be determined or estimated during a calibration or initialization procedure performed prior to generating the real-time stream of AI-enhanced video frames. This may, for example, be achieved by iteratively performing test runs of the computer-implemented method on a calibration video feed comprising a sequence of prerecorded video frames. At each iteration, the number of GPUs and/or GPU-accelerated containers may be adjusted and the achieved frame rate of the generated stream of AI-enhanced video frames may be compared to the specified frame rate, i.e. the desired frame rate for the real-time stream of AI-enhanced video frames.

According to an example embodiment, the computer-implemented method may further comprise, by the processing unit, enabling one or more additional GPU-accelerated containers for achieving the specified frame rate of the real-time stream.

Thus, in addition to disabling underperforming GPU-accelerated containers, one or more additional GPU-accelerated containers may be enabled during run-time of the computer-implemented method to achieve the specified frame rate. Enabling a GPU-accelerated container may refer to initiating a new GPU-accelerated container within a running GPU, initiating a new GPU-accelerated container within a new GPU, or starting the assignment of video frames of the live video feed to a GPU-accelerated container which was already running but was previously not being used for generating AI-enhanced video frames. Additional GPU-accelerated containers may be enabled based on the achieved frame rate of the real-time stream of AI-enhanced video frames. For example, one or more additional GPU-accelerated containers may be enabled if the average frame rate of the real-time stream drops below the specified frame rate and/or below the minimum frame rate.

According to an example embodiment, the computer-implemented method may further comprise, by the GPU-accelerated containers, intermittently fetching a settings file comprising model parameters for controlling the enhancing of the generative AI-models.

This settings file may, for example, be fetched from the shared memory that is accessible to both the processing unit and the GPUs. The settings file may be fetched by a GPU-accelerated container when it completes the enhancing of a video frame into an AI-enhanced video frame and before being assigned a next video frame of the live video feed. This allows interactively controlling the applied AI-enhancements by adjusting the parameters and models defined within the settings file on the fly, i.e. while receiving the live video feed and during runtime of the computer-implemented method.

According to an example embodiment, the computer-implemented method may further comprise, by the processing unit, skipping the enhancing of a video frame of the live video feed that is similar to a preceding video frame in the live video feed; and outputting the AI-enhanced video frame of the preceding video frame at the specified frame rate.

This improves the computational efficiency of generating the real-time stream of AI-enhanced video frames as it avoids needlessly repeating substantially the same processing on similar consecutive video frames. This further contributes to keeping the frame rate of the real-time stream stable at the specified frame rate.

According to an example embodiment, the generative AI-model may comprise a diffusion model configured to enhance video frames.

According to an example embodiment, the generative AI model may further comprise one or more LoRa models configured to fine-tune the diffusion model, a segmentation model configured to determine one or more masking regions within the video frames for enhancing by the diffusion model, one or more ControlNet models, and a latent blend configured to blend one or more video frames in latent space.

According to a second aspect, the disclosure relates to a computer-implemented method for generating a real-time stream of AI-enhanced data on a graphics processing unit, GPU, cluster; wherein the GPU cluster comprises a processing unit and a plurality of GPUs; and wherein the respective GPUs are configured to support one or more GPU-accelerated containers each running a generative AI-model asynchronously to enhance a data frame into an AI-enhanced data frame; the computer-implemented method comprising, by the processing unit, while receiving a data feed:
- assigning the respective data frames of the data feed to available GPU-accelerated containers to asynchronously enhance the data feed frame-by-frame into the real-time stream of AI-enhanced data frames;
- outputting a next AI-enhanced data frame to the real-time stream at a specified data rate, if the next AI-enhanced data frame is available within a threshold interval from outputting the previous AI-enhanced data frame to the real-time stream;

- else, reducing a performance score of the GPU-accelerated container tasked with enhancing a data frame into the next AI-enhanced data frame; and
- disabling GPU-accelerated containers with a performance score lower than a minimum performance score defined by a minimum data rate for the real-time stream.

The computer-implemented method may thus also be performed on a stream of data other than a video stream, i.e. the data feed, to generate a real-time stream of AI-enhanced data. The data feed may, for example, be an audio stream, a social media feed, financial market data, Internet of Things sensor data, live traffic data, health monitoring data, weather data, or other temporal dynamic data. It will be apparent that the above-mentioned example embodiments of the first aspect may also be embodiments of the second aspect.

According to a third aspect, the disclosure relates to a graphics processing unit, GPU, cluster, configured to perform the computer-implemented method according to the first aspect; wherein the GPU cluster comprises a processing unit and a plurality of GPUs; and wherein the respective GPUs are configured to support one or more GPU-accelerated containers each running a generative AI-model asynchronously to enhance a video frame into an AI-enhanced video frame.

According to a fourth aspect, the disclosure relates to a computer program comprising instructions which, when the program is executed by a computer, cause the computer to perform the computer implemented method according to the first aspect.

According to a fifth aspect, the disclosure relates to a computer-readable medium comprising instructions which, when executed by a computer, cause the computer to perform the computer implemented method according to the first aspect.

### Brief Description of the Drawings

Fig. 1 shows an example of a video processing pipeline using generative artificial intelligence, AI;
Fig. 2 shows steps of a computer-implemented method for generating a real-time stream of AI-enhanced video frames and a GPU cluster for performing the computer-implemented method, according to example embodiments;
Fig. 3 shows the interaction between a processing unit of the GPU cluster and one or more GPU-accelerated containers, according to example embodiments;
Fig. 4 shows additional step of the computer-implemented method, according to example embodiments;
Fig. 5 shows a queue for buffering AI-enhanced video frames until outputted to the real-time stream; and
Fig. 6 shows an example model architecture of the generative AI-models running on the GPU-accelerated containers to enhance video frames into AI-enhanced video frames.

### Detailed Description of Embodiment(s)

Real-time processing of dynamic high-frequency data streams, e.g. video frames, audio frames, social media feeds, financial market data, Internet of Things sensor data, live traffic data, health monitoring data, weather data, or other temporal dynamic data, poses significant computational challenges, particularly when applying artificial intelligence-, AI-, based enhancement techniques.

Enhancing data frames in real-time using AI requires substantial processing power, often necessitating the use of Graphics Processing Units, GPUs, due to their parallel computing capabilities. However, conventional approaches to GPU workload distribution suffer from inefficiencies such as suboptimal resource allocation, excessive latency, and bottlenecks in memory bandwidth, all of which hinder real-time performance. These inefficiencies are exacerbated when dealing with dynamically varying workloads due to fluctuating frame complexity and, thus, fluctuating computational demands over time. This results in unpredictable frame processing times.

Distributing the workload of AI-enhancing temporal dynamic data across multiple GPUs has the further challenge that the data streams have to be segmented in frames, enhanced on a frame-by-frame basis, and merged in real-time and in chronological order. Due to the unpredictable frame processing times, it is thus a challenge to precisely time and schedule the GPU workloads such that the next frame is timely processed and ready to be output such that a stable output data rate can be maintained and presented in real-time to a user without stuttering or delays.

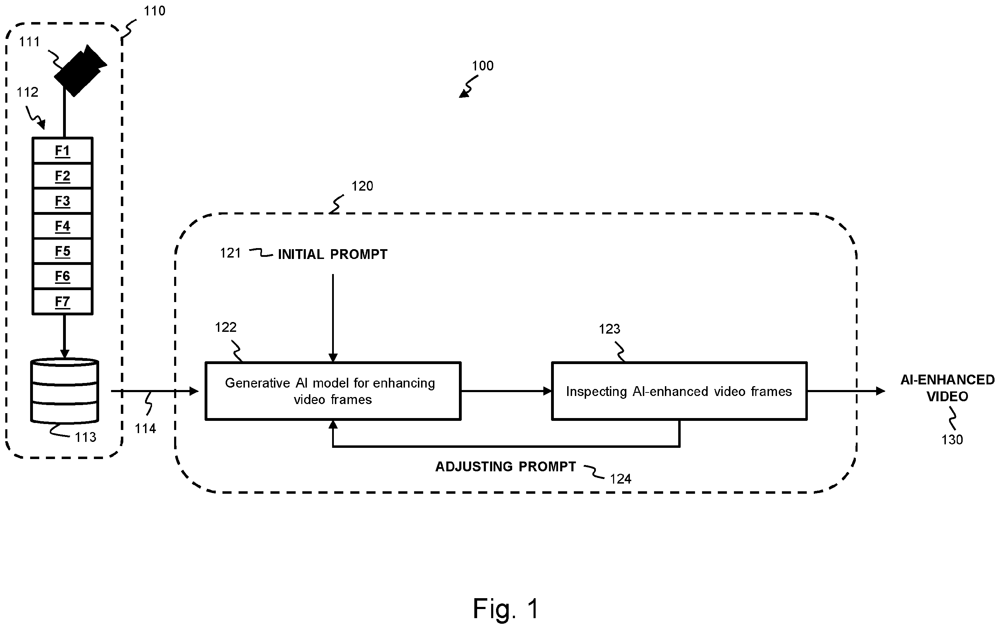

Fig. 1 illustrates these challenges in the specific example of AI-enhancing video frames by showing an example pipeline 100 of a modern video production process using generative AI. The video production process may typically comprise a production phase 110, during which video footage 112 may be captured by an image capturing device 111, followed by a postproduction phase 120, during which corrections, manipulations, and enhancements of the captured video footage 112 may be performed.

The captured video frames F1 - F7 112 are typically stored in a memory 113 during the production phase 110, to be AI-enhanced during postproduction 120 at a later moment in time due to the high computational load and processing time associated with AI-enhancing the video frames 112. During postproduction 120, the video frames 112 may be fetched 114 from memory 113 to be enhanced by a generative AI model in step 122 based on an initial prompt 121 and/or other input parameters. A video professional may visually inspect the AI-enhanced video frames in step 123 and determine whether these achieve the desired result. If not, the video professional may iteratively adjust the prompts 124 until he/she is satisfied with the result, thereby obtaining the final AI-enhanced video 130.

However, several parameters during the production phase 110 can affect or limit the AI-enhancement possibilities in postproduction 120, e.g. camera movement, mise-en-scene, lighting, actor movement, and actor appearance. In the postproduction phase 120, it is typically too late or too costly to correct production parameters as it would require re-shooting scenes, i.e. repeating at least part of the production phase 110. As such, video professionals that shoot video to be enhanced by generative AI in postproduction 120 are shooting blindly during the production phase 110, as they are unaware what the final outcome 130 will look like. It is thus a problem that the outcome of AI-enhanced video recordings are difficult to predict during production 110, i.e. while video frames 112 are being captured by an image capture device 111. It can thus be desirable to display a real-time preview of the AI-enhanced video 130 during the production phase 110, which requires substantially real-time AI-enhancing the recorded video frames.

It is a further challenge that consecutive AI-enhanced video frames are prone to temporal inconsistencies, i.e. sudden or unnatural changes between consecutive video frames, which can result in unwanted flickering, ghosting effects, and/or loss of coherence. AI models that are aimed at alleviating temporal inconsistencies typically rely on diffusion-based architectures, which are computationally expensive and require multiple inference steps per video frame. Moreover, the inference duration can vary substantially from frame to frame due to, for example, substantial frame-to-frame changes in the recorded video, the complexity or intricacy of details within the recorded video frames, or the availability of computing resources. This complicates generating a real-time preview of AI-enhanced video frames at a steady frame rate while the raw video frames 112 are being captured.

It will be apparent that the above-mentioned problems and challenges may also exist with AI-enhancing other live camera feeds captured by an image-capturing device 111 such as, for example, while covering a sports event, recording a YouTube video, holding a videocall, or recording a picture-in-picture stream such as a facecam recording for a gaming stream.

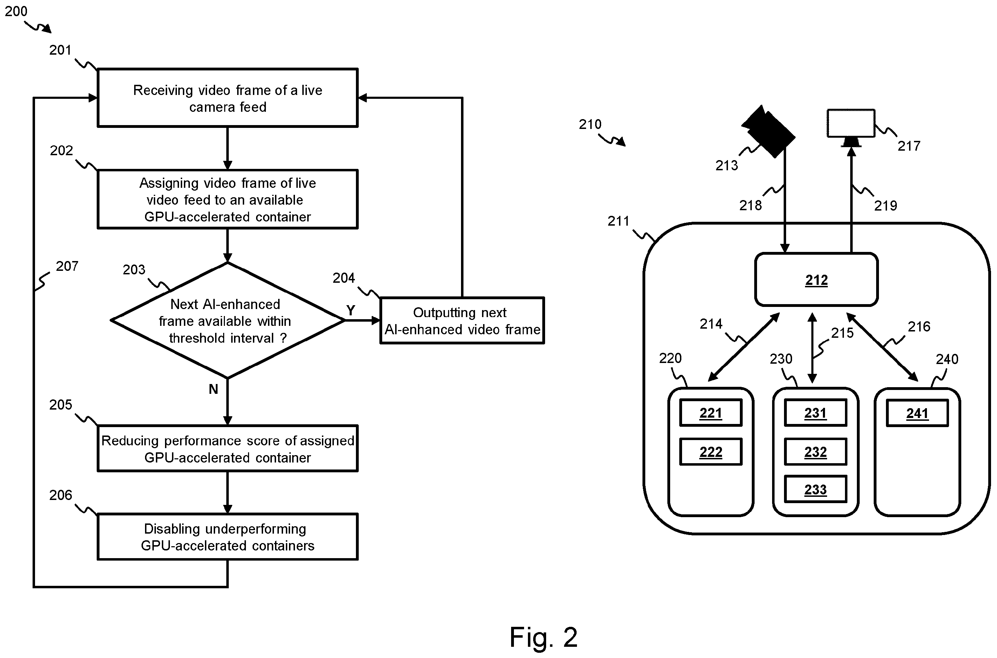

Fig. 2 shows steps 200 of a computer-implemented method that addresses these challenges by providing a real-time data pipeline that distributes the computational workload for generating a real-time stream of AI-enhanced video frames across multiple GPUs 220, 230, 240 in an inventive way. Fig. 2 further shows a GPU cluster 211 that is suitable to perform the computer-implemented method 200. The GPU cluster 211 comprises a plurality of GPUs 220, 230, 240. GPUs 220, 230, 240 may be provided within a single machine or may be distributed across multiple interconnected machines, which may be interconnected by a high-speed internet connection or a private local area network. The GPU cluster 211 may thus be a cloud-based GPU cluster or a local GPU cluster. A local GPU cluster has the advantage that it can avoid the additional latency incurred by exchanging data over the internet within a cloud-based GPU cluster.

The GPUs 220, 230, 240 are configured to support one or more GPU-accelerated containers 221, 222, 231, 232, 233, 241, e.g. docker containers. A generative AI-model is executed asynchronously on the respective GPU-accelerated containers 221, 222, 231, 232, 233, 241. Asynchronous execution refers to the generative AI-models processing inputs independently from one another at potentially different starting times and processing speeds. The generative AI-models enhance a video frame into an AI-enhanced video frame by applying, for example, super-resolution, upscaling, noise reduction, frame interpolation, video reconstruction, style transformation, and/or video augmentation.

GPU cluster 211 further comprises a processing unit 212 configured to schedule and distribute 214, 215, 216 the workload across the GPU-accelerated containers 221, 222, 231, 232, 233, 241. The processing unit 212 is further configured to receive 218, 201 a live video feed that comprises a stream of temporally ordered video frames. The live video feed may be a live camera feed captured by an image-capturing device 213, e.g. while shooting a movie, covering a sports event, recording a YouTube video, having a videocall, or recording a picture-in-picture stream such as a facecam recording for a gaming stream. This may, for example, allow to generate a real-time preview 217 of the AI-enhanced video frames while capturing the video frames with an image capturing device. Alternatively, the live video feed may be a stream of rendered in-game frames which are dynamically generated by a game engine based on a player's actions. This may, for example, allow to generate an improved and/or personalized gaming experience.

The processing unit 212 thus receives a continuous stream 218 of video frames from a live video feed and controls the conversion of this video feed into a real-time stream 219 of AI-enhanced video frames by distributing 214, 215, 216 the received video frames across GPU-accelerated containers 221, 222, 231, 232, 233, 241 each running a generative AI-model asynchronously to enhance video frames into AI-enhanced video frames on a frame-by-frame basis. To this end, the processing unit 212 assigns 214, 215, 216 video frames of the live video feed 218 to available GPU-accelerated containers 2221, 222, 231, 232, 233, 241 in step 202. After completing the AI-enhancing of an assigned video frame, the GPU-accelerated containers 221, 222, 231, 232, 233, 241 return 214, 215, 216 the AI-enhance video frame to the processing unit 212. The processing unit 212 may further control the conversion of the live video feed 218 into the real-time stream 219 by outputting the AI-enhanced frames in chronological order to the real-time stream 219.

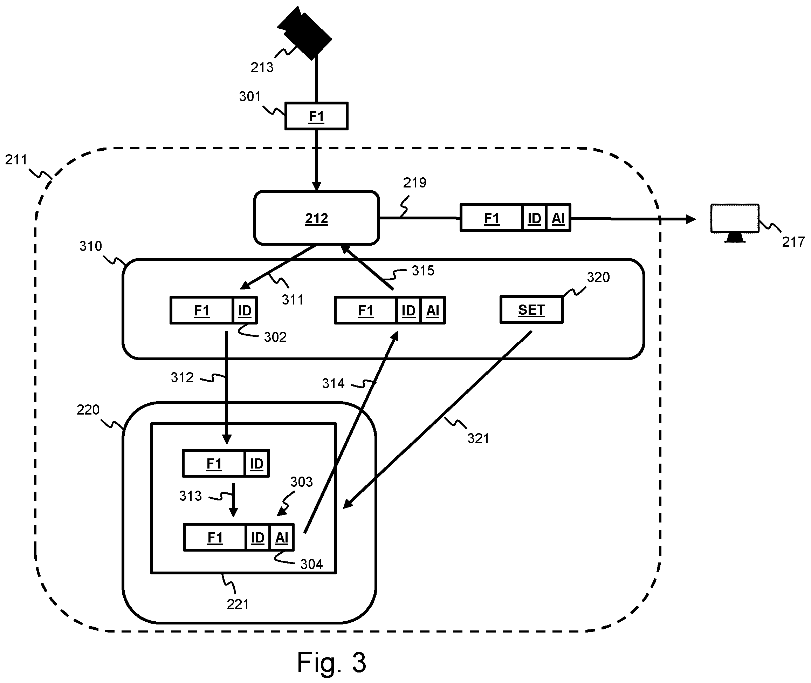

Fig. 3 shows how a video frame F1 301 may be assigned to an available GPU-accelerated container 221 and how the AI-enhanced video frame F1 303 may be returned to the processing unit 212, according to example embodiments. To this end, the GPU cluster 211 may further comprise a shared memory 310 that is accessible to the processing unit 212 and the GPU 220 and the GPU-accelerated containers 221 running therein. It will be apparent that Fig. 3 only shows a single GPU 220 and GPU-accelerated container 221 for clarity and, that, GPU 220 may comprise more containers and/or GPU cluster 211 may comprise more GPUs.

The processing unit 212 may further be configured to mark the received video frame F1 301 with an identifier 302 associated with an available GPU-accelerated container, e.g. GPU-accelerated container 221, prior to storing 311 the marked video frame within the shared memory 310. This marking may, for example, be achieved by including the identifier 302 of the assigned GPU-accelerated container within the file name of the video frame as stored on the shared memory 310. The processing unit 212 may further be configured to mark the video frame F1 with a frame number indicative for the temporal order of the video frame within the live video feed. The GPU-accelerated containers 221 may further be configured to repeatedly check the shared memory 310 for video frames marked with an identifier 302 that matches the container's identifier. Upon detecting such a video frame, the GPU-accelerated container 221 may be configured to fetch 312 it from the shared memory 310. In doing so, video frame F1 301 has been assigned to an available GPU-accelerated container 221.

After completing the AI-enhancing of the assigned video frame F1, the GPU-accelerated container 221 may further be configured to mark 313 the frame F1 303 as 'enhanced', e.g. by marking it with a predetermined 'enhanced' mark 304, prior to storing 314 the AI-enhanced video frame 303 within the shared memory 310. This marking may, for example, be achieved by including the predetermined 'enhanced' mark 304 within the file name of the AI-enhanced video frame 303 as stored on the shared memory 310. It will be apparent that, if the video frame F1 has been marked with a frame number, the frame number mark may be passed on from the video frame to the AI-enhanced video frame 303. The processing unit 212 may further be configured to fetch 315 the AI-enhanced video frames from the shared memory 310 to output them frame-by-frame to the real-time stream 219 at a specified frame rate. The AI-enhanced frames are outputted in substantially the same temporal order as they were captured by image capturing device 213, i.e. in substantially the same chronological order as within the live video feed 218. To this end, processing unit 212 may be configured to identify the next AI-enhanced video frame for the real-time stream 219 at a specified frame rate, e.g. 24fps, 25fps. 30 fps, 50 fps, or 60fps. In other words, at the specified frame rate intervals, the processing unit 212 may check whether the enhancing of the next video frame in the temporal order has been completed. This may, for example, be achieved based on the frame number of the AI-enhanced video frame.

Returning to Fig. 2, this is also shown in step 203 and 204. If the next AI-enhanced video frame is available at the specified frame rate in step 203, it is outputted to the real-time stream in step 204. If the next AI-enhanced video frame is not available at the specified frame rate, the processing unit 212 waits for at most an allowable margin of error until a threshold interval has elapsed since outputting the previous AI-enhanced video frame to the real-time stream. The threshold interval thus comprises the frame interval of the specified frame rate in addition to an allowable margin of error.

The threshold interval may be defined by a minimum frame rate, e.g. 24fps. The threshold interval may then correspond to the frame interval associated with this minimum frame rate, i.e. 1/24 fps = 41.67 ms. For example, if the specified frame rate is 60 fps, AI-enhanced video frames would ideally be outputted every 16.67 ms. If the next AI-enhanced frame is not available 16.67 ms after the previously outputted AI-enhanced frame, a maximum of 25 ms is waited until 41.67 ms have elapsed, which corresponds to the interval between frames outputted at the minimum frame rate of 24 fps.

If the next AI-enhanced video frame is not available within the threshold interval, the computer-implemented method proceeds to step 205 to reduce a performance score of the GPU-accelerated container tasked with enhancing a video frame into the next AI-enhanced video frame. In other words, if a GPU-accelerated container fails to complete the generation of the AI-enhanced video frame within the threshold interval, the performance score of the GPU-accelerated container is reduced.

In a next step 206, GPU-accelerated containers with a performance score lower than a minimum performance score are disabled. Disabling a GPU-accelerated container refers to refraining from assigning any future video frames of the live video feed to said GPU-accelerated container to enhance the live video feed into the real-time stream of AI-enhanced video frames. The minimum performance score is defined by the minimum frame rate, i.e. a GPU-accelerated container that has a performance score lower than the minimum frame rate can no longer be trusted to process frames quickly enough to respect the minimum frame rate. The minimum frame rate may be related to the specified frame rate for the AI-enhance video stream, e.g. a percentage of the specified frame rate. The minimum frame rate may preferably be selected such that the difference between the specified frame rate and the minimum frame rate is hardly noticeable by a viewer of the real-time stream of AI-enhanced video frames.

In doing so, GPU-accelerated containers that hamper or stall the output of AI-enhanced video frames at the specified frame rate can be detected and removed from the pipeline without the viewer or user noticing any substantial frame rate drop, choppiness, frame skipping, stuttering, lag, or otherwise unstable frame rate. The computer-implemented method thus allows keeping the frame rate of the real-time stream substantially stable at around the specified frame rate. This allows generating and/or modifying the live camera feed in substantially real-time while maintaining a substantially stable frame rate.

The computer-implemented method may further comprise disabling one or more GPUs 220, 230, 240 that underperform and thereby hinder the real-time stream at a stable frame rate. This can, for example, be achieved based on the performance score of the GPU-accelerated containers running within the GPUs.

It will further be apparent that the computer-implemented method may also be performed on a stream of data other than a stream of video frames in order to generate a real-time stream of AI-enhanced data. The computer-implemented method may thus also be performed on a data feed which may, for example, be an audio stream, a social media feed, financial market data, Internet of Things sensor data, live traffic data, health monitoring data, weather data, or other temporal dynamic data. This can, for example, allow to process temporal dynamic data by AI models in substantially real-time without drops or sudden changes in the rate at which the outputs are generated, i.e. the data rate of the real-time stream. It will further be apparent that the embodiments of this disclosure describe examples for generating a real-time stream of AI-enhanced video frames from a live video feed, but that these embodiments may be applied substantially unchanged to generate a real-time stream of AI-enhanced data frames from a data feed.

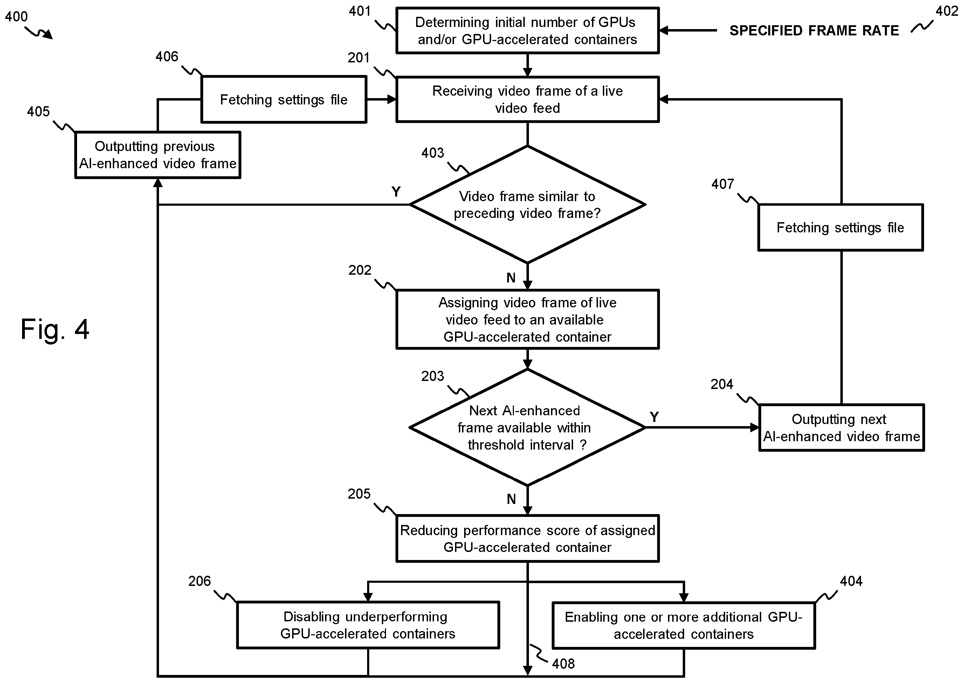

Fig. 4 shows additional steps 400 of the computer-implemented method according to example embodiments. In a first step 401, the initial number of GPUs and/or GPU-accelerated containers for achieving the specified frame rate 402 may be determined. This may be done during a so-called calibration or initialization procedure prior to generating the real-time stream of AI-enhanced video frames. This may, for example, be achieved by iteratively performing test runs of the computer-implemented method on a calibration video feed comprising a sequence of prerecorded video frames. At each iteration, the number of GPUs and/or GPU-accelerated containers may be adjusted and the achieved frame rate of the generated stream of AI-enhanced video frames may be compared to the specified frame rate.

After the initialization, the processing unit is ready to start receiving video frames of a live video feed in step 201. In a following step 403, the processing unit may further be configured to check the similarity between the most recent received video frame of the live video feed and the previous received video frame of the live video feed. If the consecutive video frames are substantially similar, AI-enhancing the most recent received video frame may be skipped and the AI-enhanced frame of the previous video frame of the live video feed may be outputted to the real-time stream at the specified frame rate in step 405. This improves the computational efficiency of generating the real-time stream of AI-enhanced video frames as it avoids needlessly repeating substantially the same processing on similar consecutive video frames. This further contributes to keeping the frame rate of the real-time stream stable at the specified frame rate.

If the consecutive video frames are not similar in step 403, the computer-implemented method may proceed to step 202 to assign the video frame to an available GPU-accelerated container as discussed in relation to Fig. 2 and/or Fig. 3. Thereafter, in steps 203 and 205, the performance score of underperforming GPU-accelerated containers may be reduced as discussed in relation to Fig. 2 and/or Fig. 3. In addition to disabling underperforming GPU-accelerated containers in step 206, the computer-implemented method may further comprise enabling one or more additional GPU-accelerated containers for achieving the specified frame rate of the real-time stream in step 404.

Enabling a GPU-accelerated container may refer to initiating a new GPU-accelerated container within a running GPU, initiating a new GPU-accelerated container within a new GPU, or starting the assignment of video frames of the live video feed to a GPU-accelerated container which was already running but was previously not being used for generating AI-enhanced video frames. Additional GPU-accelerated containers may be enabled based on the achieved or realised frame rate of the real-time stream of AI-enhanced video frames, e.g. one or more additional GPU-accelerated containers may be enabled if the average frame rate of the real-time stream drops below the specified frame rate or the minimum frame rate.

In a following step 405, the AI-enhanced frame of the previous video frame of the live video feed may be outputted to the real-time stream at the specified frame rate. It will further be apparent that not each iteration of reducing the performance score of a GPU-accelerated container in step 205 is necessarily followed by disabling underperforming GPU-accelerated containers in step 206 or enabling additional GPU-accelerated containers in step 404. In other words, the performance score of a GPU-accelerated container may be reduced after which the computer-implemented method proceeds directly to step 405, i.e. via path 408.

The computer-implemented method may further comprise, by the GPU-accelerated containers, intermittently fetching a settings file in steps 406 and 407. The settings file may define model architectures, AI models, and/or input parameters of these models such as prompts for the AI-enhancing performed by the GPU-accelerated containers. In other words, the settings file may control the enhancing performed by the generative AI models. As illustrated in Fig. 3, this settings file 320 may be fetched 321 from the shared memory 310 that is accessible to both the processing unit 212 and the GPUs 220. The settings file 320 may be fetched by a GPU-accelerated container 221 when it completes the enhancing 313 of a video frame into 301 an AI-enhanced video frame 303 and before being assigned a next video frame of the live video feed. For example, the settings file may be fetched in step 406 of Fig. 4 after outputting a previous AI-enhanced video frame, or in step 407 after outputting the next AI-enhanced video frame. Intermittently fetching the settings file allows interactively controlling the applied AI-enhancements by adjusting the parameters and models on the fly, i.e. while receiving the live video feed and during runtime of the computer-implemented method.

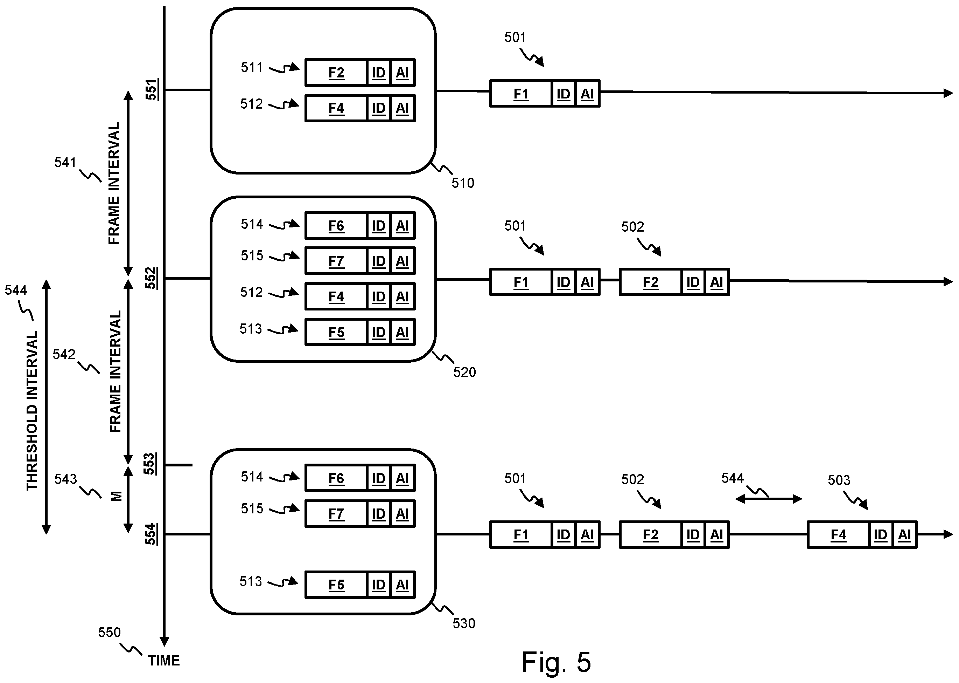

According to example embodiments, AI-enhanced video frames may further be buffered within a queue until they are to be outputted to the real-time stream. Fig. 5 shows an example of such a queue 510, 520, 530 and the AI-enhanced frames 511 - 515 buffered therein at different moments in time 551, 552, 554. The queue 510, 520, 530 may, for example, be kept within the shared memory 310 of Fig. 3. As discussed in relation to Fig. 3, the AI-enhanced frames 511 - 515 may be marked with a frame number indicative for the temporal order of the video frames within the live video feed, i.e. F1 - F7; marked with an identifier 'ID' associated to the GPU-accelerated containers tasked with enhancing the video frames; and marked with a predetermined enhanced mark 'AI' indicative for the completion of the AI-enhancing by the GPU-accelerated containers.

In these example embodiments, the processing unit may further be configured to monitor the queue 510, 520, 530 for the presence of the next AI-enhanced video frame at least at the specified frame rate of the real-time stream. For example, at timestep 551, the queue 510 may comprise the AI-enhanced version of the second video frame in the live video feed, i.e. F2, and the fourth video frame in the live video feed, i.e. F4. The first AI-enhanced video frame may then be outputted as the first frame 501 in the real-time stream. After a frame interval 541 has elapsed, the processing unit may check whether the AI-enhanced version of frame F2, i.e. the next AI-enhanced frame, is present within the queue 520. As this is the case, frame F2 may be outputted as the next frame 502 of the real-time stream. Another frame interval 542 later, the processing unit fails to detect the next AI-enhanced video frame, i.e. frame F3, within queue 530. This may, for example, be due to a longer processing time for generating AI-enhanced video frame F3. The processing unit waits for, at most, the allowable margin of error M 543 until the threshold interval 544 has elapsed at timestep 554, i.e. the sum of frame interval 542 and the allowable margin of error M 543. The processing unit may monitor or check the queue more frequently for the next AI-enhanced frame within the threshold interval. As the next AI-enhanced video frame F3 is still not available at timestep 554, the processing unit may output the AI-enhanced frame that is available within the queue 530 and marked with the smallest frame number. As such, frame F4 is outputted as the next frame 503 of the real-time stream after the threshold interval 544 has elapsed. In doing so, the video frame closest in temporal order to the next AI-enhanced video frame that should have been outputted is outputted to the real-time stream, i.e. F4. This effectively skips one or more AI-enhanced video frames, i.e. F3. This can avoid or at least limit interruptions, lag, and substantial frame rate drops of the real-time stream.

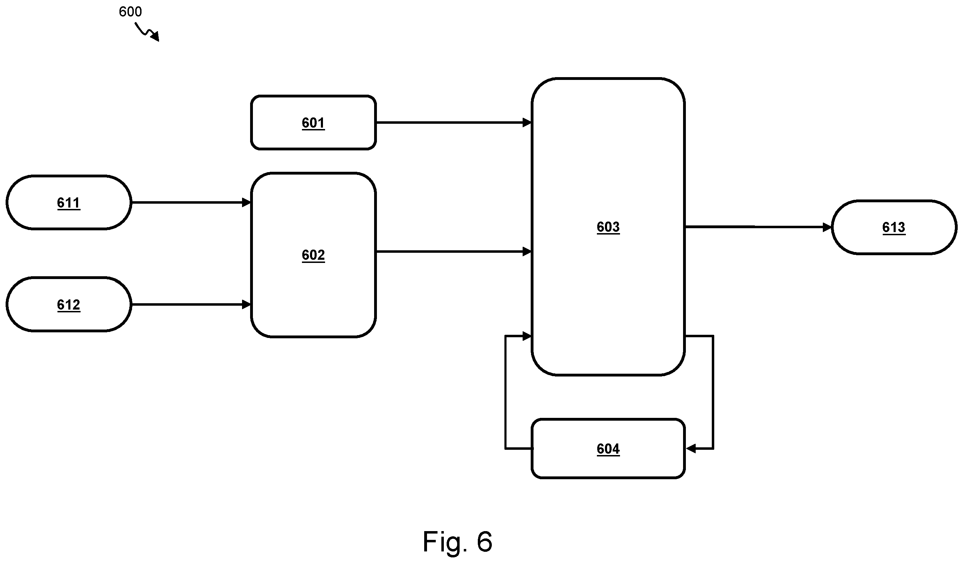

Fig. 6 shows an example model architecture 600 of the generative AI-models running on the GPU-accelerated containers to enhance video frames into AI-enhanced video frames. The generative AI-model may receive a first video frame 611 of the live video feed as an input. As described in relation to Fig. 2 and Fig. 3, this video frame 611 is assigned, by the processing unit, to the GPU-accelerated container that is running the generative AI-model 600 to enhance the video frame 611 into an AI-enhanced video frame 613. The generative AI-model 600 may further receive a second video frame 612 of the live video feed as an input. The second video frame 612 may be a video frame that precedes or follows the first video frame 611 within the chronological order of video frames of the live video feed. The first 611 and/or second video frame 612 may both be provided as an input to an image segmentation block 602 configured to determine one or more masking regions within the video frames 611, 612 for enhancing. By providing the GPU-accelerated containers access to consecutive video frames, flickering and unnatural transitions between the AI-enhanced video frames can be further reduced. The image segmentation block 602 may identify and classify different objects, regions, or elements within the video frames 611, 612. This allows to apply more targeted AI-enhancements, e.g. by distinguishing between background, foreground, edges, and specific objects. In other words, this allows selective AI-enhancing such that different parts of the video frame 611 receive the appropriate, and desired, AI-enhancement.

The AI-model architecture 600 may further comprise a generative model block 601. This block 601 may be configured to predict missing details, enhance textures, and apply artistic or photorealistic modifications by generating images from noise. The generative model block 601 may be a diffusion model, e.g. a Stable Diffusion model. Alternatively or complementary, the generative model block 601 may be based on deep learning architectures such as generative adversarial networks, GANs, or Variational Autoencoders, VAEs.

The generative model block 601 and the image segmentation block 602 may be operationally connected to an inference block 603 configured to apply the AI-enhancement to the segmented portions of the video frame 611 based on the information generated by the generative model block 601. The inference block 603 may, for example, be configured to apply super-resolution, inpainting, and/or style transfer to the video frame 611 based on the information generated by the generative model block 601, thereby refining the video frame while keeping its core structure. The inference block 603 may further receive as an input, a feedback loop of a latent blend block 604. This block 604 may operate in the latent space, blending information from previous, current, and predicted video frames. In doing so, it may enable a smooth transition between AI-enhanced video frames by ensuring that enhanced frames remain temporally consistent and visually coherent. The AI-model 600 may further comprise one or more Low-Rank Adaptation, LoRa, models configured to fine-tune the used diffusion model and one or more ControlNet models that enables structured control, e.g. pose, depth, maps, or edge detection.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for generating a real-time stream of AI-enhanced video frames on a graphics processing unit, GPU, cluster (211); wherein the GPU cluster comprises a processing unit (212) and a plurality of GPUs (220, 230, 240); and wherein the respective GPUs are configured to support one or more GPU-accelerated containers (221, 222, 231, 232, 233, 241) each running a generative AI-model asynchronously to enhance a video frame into an AI-enhanced video frame; the computer-implemented method comprising, by the processing unit (212), while receiving (218) a live video feed:
- assigning (202, 214, 215, 216) the respective video frames of the live video feed to available GPU-accelerated containers to asynchronously enhance the live video feed frame-by-frame into the real-time stream of AI-enhanced video frames;
- outputting (204, 219) a next AI-enhanced video frame to the real-time stream at a specified frame rate, if (203) the next AI-enhanced video frame is available within a threshold interval from outputting the previous AI-enhanced video frame to the real-time stream;
- else, reducing (205) a performance score of the GPU-accelerated container tasked with enhancing a video frame into the next AI-enhanced video frame; and
- disabling (206) GPU-accelerated containers with a performance score lower than a minimum performance score defined by a minimum frame rate for the real-time stream.

2. The computer-implemented method according to claim 1, wherein the threshold interval is defined by the minimum frame rate.

3. The computer-implemented method according to any of the preceding claims, wherein the GPU cluster is a local GPU cluster.

4. The computer-implemented method according to any of the preceding claims, wherein the GPU cluster (300) further comprises a shared memory (310) that is accessible to the processing unit (212) and the GPUs (220); and wherein assigning respective video frames (301) of the live video feed to available GPU-accelerated containers comprises:
- by the processing unit, marking the respective video frames with an identifier (302) associated with an available GPU-accelerated container (221) and storing (311) the marked video frames within the shared memory; and
- by the available GPU-accelerated containers, fetching (312) the video frames marked with their associated identifier from the shared memory.

5. The computer-implemented method according to any of the preceding claims, wherein the GPU cluster (300) further comprises a shared memory (310) that is accessible to the processing unit (212) and the GPUs (220); the computer-implemented method further comprising:
- by the GPU-accelerated containers (221), marking (313) a video frame assigned to the GPU-accelerated containers as enhanced (304) after completing the enhancing of the video frame into an AI-enhanced video frame (303), and storing (314) the marked AI-enhanced video frames within the shared memory; and
- by the processing unit, fetching (315) the AI-enhanced video frames marked as enhanced from the shared memory.

6. The computer-implemented method according to any of the preceding claims, further comprising, by the processing unit, buffering the AI-enhanced video frames within a queue (510, 520, 530) and monitoring the queue for the presence of the next AI-enhanced video frame (501, 502, 503) at least at the specified frame rate (541, 542) of the real-time stream.

7. The computer-implemented method according to claim 6, further comprising, by the processing unit, marking the video frames of the live video feed with a frame number indicative for the temporal order of the video frames within the live video feed; and monitoring the queue (510, 520, 530) for the next AI-enhanced video frame based on the marked frame number passed on from the video frame to the AI-enhanced video frame.

8. The computer-implemented method according to claim 7, further comprising, by the processing unit, if the next AI-enhanced video frame is unavailable within the threshold interval, outputting the AI-enhanced frame within the queue that is marked with the smallest frame number.

9. The computer-implemented method according to any claims 1 - 7, further comprising, by the processing unit, if (203) the next AI-enhanced video frame is unavailable within the threshold interval, outputting (305) the previous AI-enhanced frame again.

10. The computer-implemented method according to any of the preceding claims, further comprising, before assigning (202) video frames of the live video feed to available GPU-accelerated containers, determining (301) an initial number of GPUs (220, 230, 240) and/or GPU-accelerated containers (221, 222, 231, 232, 233, 241) for achieving the specified frame rate (302) of the real-time stream.

11. The computer-implemented method according to any of the preceding claims, further comprising, by the processing unit, enabling (304) one or more additional GPU-accelerated containers for achieving the specified frame rate (302) of the real-time stream.

12. The computer-implemented method according to any of the preceding claims, further comprising, by the GPU-accelerated containers (221), intermittently fetching (321, 306, 307) a settings file (320) comprising model parameters for controlling the enhancing of the generative AI-models.

13. The computer-implemented method according to any of the preceding claims, further comprising, by the processing unit, skipping the enhancing of a video frame of the live video feed that is similar to a preceding video frame in the live video feed; and outputting (305) the AI-enhanced video frame of the preceding video frame at the specified frame rate.

14. A graphics processing unit, GPU, cluster, configured to perform the computer-implemented method according to any of claims 1 to 15; wherein the GPU cluster comprises a processing unit (212) and a plurality of GPUs (220, 230, 240); and wherein the respective GPUs are configured to support one or more GPU-accelerated containers (221, 222, 231, 232, 233, 241) each running a generative AI-model asynchronously to enhance a video frame into an AI-enhanced video frame.

15. A computer program comprising instructions which, when the program is executed by a computer, cause the computer to perform the computer implemented method according to any one of claims 1 to 15.
